# EUROPÄISCHE PATENTSCHRIFT

(11) **EP 3 581 760 B1**
(45) Veröffentlichungstag und Bekanntmachung des Hinweises auf die Patenterteilung: **11.10.2023**
(21) Anmeldenummer: 19179565.7
(22) Anmeldetag: 12.06.2019
(51) Int. Cl.: F01D 5/14, F01D 5/18

(54) **SCHAUFELBLATT FÜR EINE THERMISCHE STRÖMUNGSMASCHINE**
BLADE FOR A TURBOMACHINE
PALE D'AUBE POUR UNE TURBOMACHINE

(30) Priorität: 14.06.2018 DE 102018209610
(43) Veröffentlichungstag der Anmeldung: 18.12.2019
(73) Patentinhaber: MTU Aero Engines AG, 80995 München (DE)
(72) Erfinder: Ertl, Franz-Josef, 81249 München (DE); Hackenberg, Hans-Peter, 82140 Olching (DE); Buck, Alexander, 80997 München (DE); Ostermeir, Oskar, 82288 Kottgeisering (DE)

(56) Entgegenhaltungen:
- WO-A1-2017/009051
- DE-A1- 2 640 827
- US-A- 3 420 502
- US-A1- 2017 254 206
- US-A1- 2017 268 345

## Beschreibung

Die Arbeiten, die zu dieser Erfindung geführt haben, wurden gemäß der Finanzhilfevereinbarung Nr. CSJU-GAM-SAGE-2008-001 im Zuge des Siebten Rahmenprogramms der Europäischen Union (FP7/2007-2013) für Clean Sky Joint Technology Initiative gefördert.

### BESCHREIBUNG

### Technisches Gebiet

Die vorliegende Erfindung betrifft ein Schaufelblatt zum Anordnen im Gaskanal einer Strömungsmaschine.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der Brennkammer dahinter mit hinzugemischtem Kerosin verbrannt. Das entstehende Heißgas, eine Mischung aus Verbrennungsgas und Luft, durchströmt die Turbine dahinter und wird dabei expandiert. Die Turbine weist in der Regel mehrere Stufen auf, die jeweils aus einem Leitschaufelkranz und einem nachgelagerten Laufschaufelkranz aufgebaut sind. In den einzelnen Stufen wird dem strömenden Heißgas anteilig Energie entzogen und in eine Rotation der Laufschaufelkränze umgesetzt (diese kann dann z. B. zumindest anteilig zum Antreiben des Verdichters genutzt werden).

Auch der Verdichter ist in der Regel aus mehreren Stufen mit jeweils einem Leit- und einem Laufschaufelkranz aufgebaut. Wie im Falle der Turbine weist jeder Kranz in der Regel eine Vielzahl Schaufelblätter auf. Das vorliegend in Rede stehende Schaufelblatt ist zum Anordnen im Gaskanal vorgesehen, es kann im Allgemeinen auch als Teil des Verdichters im Verdichtergaskanal angeordnet sein und im Betrieb mit Verdichtergas umströmt werden, etwa angesaugter Luft im Falle des Strahltriebwerks. Bevorzugt ist eine Anwendung im Turbinenbereich, wird das Schaufelblatt also im Heißgaskanal angeordnet und von dem Heißgas umströmt. In diesem Zusammenhang sind aus dem Stand der Technik auch gekühlte Schaufelblätter bekannt, mit einer Hohlraumstruktur im Inneren, die im Betrieb von einem Kühlfluid durchströmt wird, bspw. Verdichterluft. Dies soll, wie die Bezugnahme auf ein Strahltriebwerk, den vorliegenden Gegenstand illustrieren, ihn zunächst aber nicht in seiner Allgemeinheit beschränken (alternativ zu einem Strahltriebwerk könnte das Schaufelblatt bspw. in einer stationären Gasturbine Anwendung finden).

Schaufelblätter mit mehreren getrennten Hohlräumen sind aus dem Dokument US20170268345A1 bekannt. Schaufelblätter mit unterbrochenen Seitenwänden sind aus den Dokumenten WO2017009051A1, US20170254206A1, DE2640827A1 und US3420502A1 bekannt.

### Darstellung der Erfindung

Der vorliegenden Erfindung liegt das technische Problem zugrunde, ein besonders vorteilhaftes Schaufelblatt anzugeben, dass in seinem Inneren eine Hohlraumstruktur aufweist.

Dies wird erfindungsgemäß mit dem Schaufelblatt gemäß Anspruch 1 gelöst. Konkret betrifft die Neuerung den Verlauf der Innenwandfläche der Saugseitenwand und/oder der Innenwandfläche der Druckseitenwand des Schaufelblatts (die Innenwandflächen fassen miteinander die Hohlraumstruktur ein). Gemäß der Neuerung erstreckt sich zumindest eine dieser Innenwandflächen im Schnitt betrachtet mit einem Krümmungswechsel in einen stromaufwärtigen und einen stromabwärtigen Endbereich hinein (in den Endbereichen laufen die Saug- und die Druckseitenwand ineinander). Der Verlauf der entsprechenden Innenwandfläche wird dabei auf die Skelettlinie des Schaufelblatts normiert betrachtet, es bleibt also die dem Schaufelprofil inhärente Krümmung außer Betracht (siehe unten im Detail).

Erfindungsgemäß erstreckt sich in dieser Betrachtung zumindest eine der Innenwandflächen in jeden der beiden Endbereiche hinein mit einem Krümmungswechsel.

Letzteres meint, dass die Krümmung abschnittsweise ein anderes Vorzeichen als dann an dem Endbereich und vor dem Krümmungswechsel hat. Geometrisch betrachtet bedeutet dies eine lokal andere Wölbung als am Endbereich; an letzterem ist die Innenwandfläche konkav gekrümmt, aufgrund des Krümmungswechsels ist sie dem Endbereich vorgelagert hingegen konvex gewölbt.

Die Innenwandfläche ist somit (zum Endbereich hin) zunächst konvex in den Hohlraum hinein gewölbt, was umgekehrt am Endbereich ihren Krümmungsradius entsprechend vergrößert (im Vergleich zu einer Innenwandfläche ohne Krümmungswechsel). Aufgrund des Krümmungswechsels ist der Krümmungsradius der den Hohlraum begrenzenden Innenwandfläche am Endbereich vergrößert. Dies ist spannungstechnisch von Vorteil, hilft nämlich die Spannungskonzentration im Endbereich verringern. Zur Veranschaulichung: betrachtet man den Hohlraum als Kerbe, wird deren Formzahl (Spannungsüberhöhung/Nennspannung) durch die am Endbereich vergrößerte lichte Weite bzw. den vergrößerten Radius erhöht, lässt sich also die Materialbeanspruchung entsprechend verringern. Die "lichte Weite" ist die Öffnungsweite der Hohlraumstruktur, die zwischen der Innenwandfläche der Saugseitenwand und der Innenwandfläche der Druckseitenwand genommen wird, und zwar senkrecht zur Skelettlinie in der achsparallelen Schnittebene. Dies kann generell, insbesondere aber im Übergangsbereich in die Deckbänder von Vorteil sein, siehe unten im Detail.

Bevorzugte Ausgestaltungen finden sich in den abhängigen Ansprüchen und der gesamten Offenbarung, wobei in der Darstellung der Merkmale nicht immer im Einzelnen zwischen Vorrichtungs- bzw. Verfahrens- oder auch Verwendungsaspekten unterschieden wird; jedenfalls implizit ist die Offenbarung hinsichtlich sämtlicher Anspruchskategorien zu lesen.

Generell bezieht sich im Rahmen dieser Offenbarung "axial" auf die Längsachse des Turbinenmoduls, mithin also die Längsachse der Strömungsmaschine, die bspw. mit einer Drehachse der Rotoren zusammenfällt. "Radial" betrifft die dazu senkrechten, davon weg weisenden Radialrichtungen, und ein "Umlauf" bzw. "umlaufend" oder die "Umlaufrichtung" betreffen die Drehung um die Längsachse. Die Angaben "stromaufwärtig" und "stromabwärtig" beziehen sich auf das Umströmen des Schaufelblatts im Gaskanal (mit dem Verdichtergas oder vorzugsweise dem Heißgas), also auf das entlang der Außenwandfläche der Saugseitenwand und entlang der Außenwandfläche der Druckseitenwand strömende Gas (nicht auf ein etwaiges Kühlfluid in der Hohlraumstruktur). Je Seitenwand liegt die jeweilige Außenwandfläche der jeweiligen Innenwandfläche entgegen, letztere begrenzt die Hohlraumstruktur.

Die Krümmung der saug- und/oder druckseitigen Innenwandfläche, also der Innenwandfläche der Saugseitenwand bzw. Druckseitenwand, wird im Schnitt betrachtet, konkret in einer achsparallelen Schnittebene. Diese liegt parallel zur Längsachse und tangential an einen Umlauf um diese (tangential an einen Zylinder mit der Längsachse als Zylinderachse). Wie nachstehend im Einzelnen deutlich wird, zeigt die jeweilige Innenwandfläche einen entsprechenden Krümmungswechsel in der Regel über eine bestimmte radiale Erstreckung hinweg, gibt es also in beliebig vielen (eng gestaffelten) Schnittebenen einen entsprechenden Krümmungswechsel.

Wie bereits erwähnt, wird der Innenwandverlauf auf die Skelettlinie des Schaufelblatts referenziert betrachtet, gewissermaßen bei einem gedanklich in gerade Form gebrachten, also nicht gewölbten Schaufelblattprofil. Die Skelettlinie ergibt sich im Schnitt betrachtet als Mittelpunktlinie von Kreisen, die jeweils so in das Profil gelegt werden, dass sie jeweils beide Außenwandflächen berühren (tangieren). Entlang des Profils lassen sich beliebig viele solcher Kreise einpassen, deren Mittelpunkte beschreiben miteinander die Skelettlinie. Mathematisch betrachtet wird die jeweilig betrachtete Innenwandfläche auf die Skelettlinie normiert, der Verlauf der jeweiligen Innenwandfläche bestimmt sich also nach dem Abstand von der Skelettlinie (der entlang der Skelettlinie jeweils senkrecht zu dieser genommen wird).

Es kann sich die saug- und/oder die druckseitige Innenwandfläche mit einem Krümmungswechsel erstrecken, und zwar in den stromaufwärtigen und den stromabwärtigen Endbereich hinein. Insgesamt kann es also bspw. vier Krümmungswechsel geben (saugseitig/stromaufwärtig, saugseitig/stromabwärtig, druckseitig/stromaufwärtig, druckseitig/stromabwärtig), siehe unten im Detail.

Dies kann sich z. B. nach Belastungsprofilen bemessen, die im Zuge der Schaufelauslegung ermittelt werden (HCF, LCF etc.).

Generell ist bzw. sind die Innenwandflächen mit dem bzw. den Krümmungswechselen) idealerweise frei liegende Oberflächen, werden sie also zu Hohlraumstruktur bzw. zum Hohlraum hin nicht von einem weiteren Bauteil verdeckt. Dieser Gedanke kommt auch darin zum Ausdruck, dass durch den Krümmungswechsel die lichte Weite der Hohlraumstruktur an den Endbereichen vergrößert wird. Es soll in dem Innenwandbereich mit dem Krümmungswechsel also bspw. kein Prallblech oder dergleichen angelötet sein. Als Innenwandflächen mit Krümmungswechsel im vorliegenden Sinn wird somit insbesondere keine Erhöhung bzw. kein nach innen hervortreten der Vorsprung oder dergleichen betrachtet, der nur der Montage eines weiteren Teils dient (z. B. eines Prallblechs). Der vorliegend in Rede stehende Krümmungswechsel ist auch und speziell im Falle einer freiliegenden Innenwandfläche von Interesse, weil er sich über die Spannungsoptimierung motiviert.

Generell hat bei einer bevorzugten Ausführungsform der Krümmungswechsel, konkret die Innenwandfläche im Schnitt betrachtet im Bereich des Krümmungswechsels, einen glatten Verlauf. Dieser ist mathematisch betrachtet stetig differenzierbar, geometrisch betrachtet ist er kantenfrei. Dies kann bspw. hinsichtlich der Vermeidung einer Spannungsüberhöhung von Vorteil sein. Der Verlauf soll bevorzugt in den Krümmungswechsel hinein und aus diesem heraus, also in den Endbereich hinein, jeweils glatt sein.

In bevorzugter Ausgestaltung ist die Wandstärke der Saugseitenwand und/oder der Druckseitenwand aufgrund des Krümmungswechsels in diesem Bereich verringert. Die Wandstärke wird in besagter Schnittebene betrachtet zwischen der Innenwandfläche und der Außenwandfläche (der jeweiligen Seitenwand) genommen, und zwar in Richtungen senkrecht zur Außenwandfläche. Im Bereich eines jeweiligen Krümmungswechsels ist die Wandstärke dann um bevorzugt mindestens 5 % verringert, weiter bevorzugt mindestens 10 %. Vorteilhafte Obergrenzen liegen bei höchstens 35 % bzw. 30 %, wobei die Ober- und Untergrenzen im Allgemeinen auch unabhängig voneinander offenbart sein sollen. Da die Grundidee darin liegt, den Krümmungsradius am Endbereich zu erweitern, ist die Wandstärke dann idealerweise auch in diesen hinein verringert, also auch im Übergang zwischen dem Bereich konvexer Krümmung (Krümmungswechsel) zur konkaven Krümmung (Endbereich).

Eine bevorzugte Ausführungsform betrifft die Anordnung eines oder beider Krümmungswechsel relativ zu einer entlang der Skelettlinie genommenen Erstreckung des Schaufelblatts zwischen Vorder- und Hinterkante.

Im Falle eines dem stromaufwärtigen Endbereich zugeordneten Krümmungswechsels soll dieser also vor bzw. stromaufwärts der Schaufelblattmitte liegen (konkret vor einer zur Skelettlinie senkrechten Mittenlinie durch besagten Mittelpunkt auf der Skelettlinie). Im Falle eines dem stromabwärtigen Endbereich zugeordneten Krümmungswechsels liegt dieser hinter bzw. stromabwärts der Schaufelblattmitte, also der eben genannten Mittenlinie.

Wie bereits erwähnt, kann sich die jeweilige Innenwandfläche (mit dem Krümmungswechsel) gemäß einer bevorzugten Variante radial über das gesamte Schaufelblatt erstrecken, also über die gesamte Kanalhöhe des Gaskanals. Es kann also in anderen Worten auf jeder radialen Höhe (zwischen 0 % am Innendeckband und 100 % am Außendeckband) eine achsparallele Schnittebene durch das Schaufelblatt gelegt werden und ist darin an der entsprechenden Innenwandfläche ein hauptanspruchsgemäßer Krümmungswechsel zu erkennen.

Andererseits ist eine entsprechende Ausgestaltung über die gesamte radiale Erstreckung jedoch nicht zwingend. Die spannungsmindernde Formgebung kann nämlich auch dann von Vorteil sein, wenn sie nur bzw. zumindest auch in besonders belasteten Bereichen angeordnet ist.

Vor diesem Hintergrund ist die jeweilige Innenwandfläche bezogen auf die Kanalhöhe des Gaskanals (0 % am Innendeckband und 100 % am Außendeckband) mindestens über einen Bereich zwischen 0 % und 20 % und/oder über einen Bereich zwischen 80 % und 100 % der Kanalhöhe mit einem entsprechendem Krümmungswechsel vorgesehen. Wird also auf beliebiger Höhe des jeweilig angegebenen Bereichs (0 % bis 20 % bzw. 80 % bis 100 %) eine achsparallele Schnittebene durch das Schaufelblatt gelegt, ist in dieser an der jeweiligen Innenwandfläche ein hauptanspruchsgemäßer Krümmungswechsel zu erkennen. Die Anordnung am Innendeckband und/oder am Außendeckband, bevorzugt in beiden Bereichen, ist insoweit von Vorteil, als dort die mechanischen Belastungen bzw. die Spannungsüberhöhung aufgrund der Kraftumlenkung besonders hoch sind, sie also die Lebensdauer limitieren können, umgekehrt also die erfindungsgemäßen Vorteile im Besonderen zum Tragen kommen.

Die jeweilige Innenwandfläche weist einen Krümmungswechsel in den stromaufwärtigen Endbereich und einen weiteren Krümmungswechsel in den stromabwärtigen Endbereich hinein auf. Bevorzugt sind an der entsprechenden Innenwandfläche (der Saugseitenwand oder der Druckseitenwand) insgesamt genau zwei Krümmungswechsel angeordnet, gibt es also (normiert auf die Skelettlinie) jeweils einen konkaven Abschnitt im jeweiligen Endbereich, zur Schaufelblattmitte hin dann den jeweiligen Krümmungswechsel (konvex) und im Bereich der Schaufelblattmitte wiederum einen konkaven Abschnitt.

Bei einer bevorzugten Ausführungsform sind in zumindest einen der beiden Endbereich hinein beide Innenwandflächen, also sowohl die saugseitige als auch die druckseitig, jeweils mit einem Krümmungswechsel vorgesehen, besonders bevorzugt gilt dies für beide Endbereiche, vgl. auch die Anmerkungen eingangs.

In bevorzugter Ausgestaltung bildet die Hohlraumstruktur im Schnitt betrachtet einen zwischen den Endbereichen durchgehenden Hohlraum. Dieser erstreckt sich also unterbrechungsfrei zwischen dem stromaufwärtigen und dem stromabwärtigen Endbereich. Bei der Hohlraumstruktur soll es sich insofern insbesondere nicht um einen seitlich gesehen mäanderförmigen Kanal mit mehreren sich jeweils radial erstreckenden Kanalabschnitten handeln (was im Allgemeinen aber möglich ist). Der Hohlraum kann mit einer vergleichsweise einfachen Geometrie vorgesehen sein, was herstellungstechnisch von Vorteil sein kann (z. B. hinsichtlich eines Gusskerns). Generell kann sich das Vorsehen eines Hohlraums auch nicht nur über eine eingangs genannte Kühlung motivieren, sondern kann es auch im Falle einer nichtgekühlten Schaufel z. B. Gewichtsvorteile geben.

In bevorzugter Ausgestaltung ist die Hohlraumstruktur zwischen den Innenwandflächen durchgehend, gibt es also auch insofern keine Unterbrechung oder dergleichen. Wie bereits vorstehend diskutiert, sind idealerweise auch keine zusätzlichen Elemente (Prallbleche etc.) eingesetzt.

Auch die Seitenwände an sich sind erfindungsgemäß jeweils unterbrechungsfrei zusammenhängend.

Dies meint, dass zwischen Innen- und Außenwandfläche der jeweiligen Seitenwand (Saugseitenwand/Druckseitenwand) das Seitenwandmaterial frei von Unterbrechungen etc. angeordnet ist. Es schließt also insbesondere keine Kavitäten (Hohlräume) ein.

Die Erfindung betrifft auch ein Turbinenmodul mit einem vorliegend offenbarten Schaufelblatt, bevorzugt weist das Turbinenmodul eine Vielzahl entsprechender Schaufelblätter auf. Diese können vorzugsweise auch in unterschiedlichen Stufen bzw. Kränzen angeordnet sein.

Ferner betrifft die Erfindung auch die Verwendung eines vorliegend offenbarten Schaufelblatts oder eines eben genannten Turbinenmoduls in einer Strömungsmaschine. Bevorzugt handelt es sich dabei um ein Strahltriebwerk, hierbei kann eine etwaige Gewichtsoptimierung im Besonderen zum Tragen kommen. Besonders bevorzugt kann die Anwendung in einem Mantelstromtriebwerk sein.

Die Hohlraumstruktur kann im Betrieb mit einem Kühlfluid durchströmt werden, bspw. mit Verdichterluft, dies ist aber im Allgemeinen nicht zwingend.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: ein Strahltriebwerk in einem Axialschnitt;
- Figur 2: einen achsparallelen Schnitt durch ein Schaufelblatt mit erfindungsgemäßem Krümmungswechsel;
- Figur 3: zu Figur 2 eine auf die Skelettlinie referenzierte Darstellung der Innenwandflächen;
- Figur 4: zu Figur 2 einen exemplarischen Verlauf ohne Krümmungswechsel.

### Bevorzugte Ausführung der Erfindung

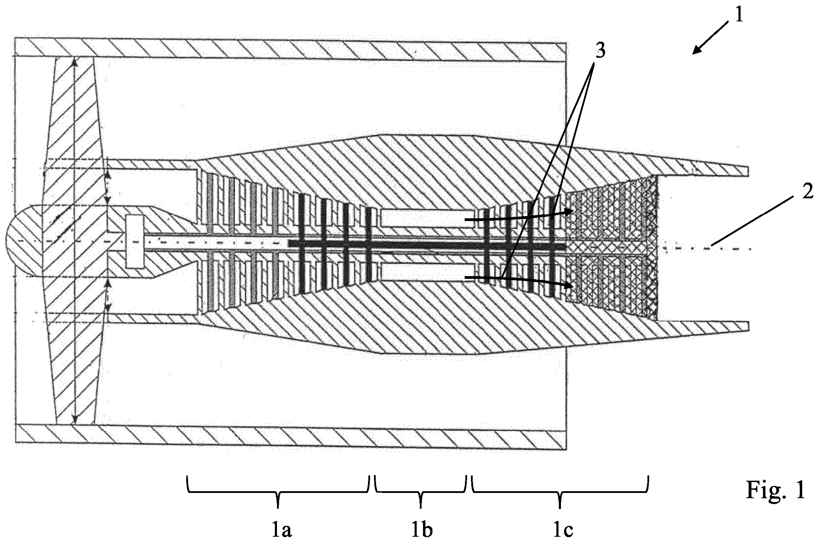

**Fig. 1** zeigt eine Strömungsmaschine 1, konkret ein Mantelstromtriebwerk, in einem Axialschnitt. Die Strömungsmaschine 1 gliedert sich funktional in Verdichter 1 A, Brennkammer 1 B und Turbine 1 C. Sowohl der Verdichter 1 A als auch die Turbine 1 C sind jeweils aus mehreren Stufen aufgebaut, jede Stufe setzt sich aus einem Leit- und einem darauffolgenden Laufschaufelkranz zusammen. Die Laufschaufelkränze rotieren im Betrieb um die Längsachse 2 der Strömungsmaschine 1. Im Verdichter 1 A wird die angesaugte Luft komprimiert, und dann in der nachgelagerten Brennkammer 1 B mit hinzugemischtem Kerosin verbrannt. Das Heißgas durchströmt den Heißgaskanal 3 und treibt dabei die Laufschaufelkränze an, die um die Längsachse 2 rotieren.

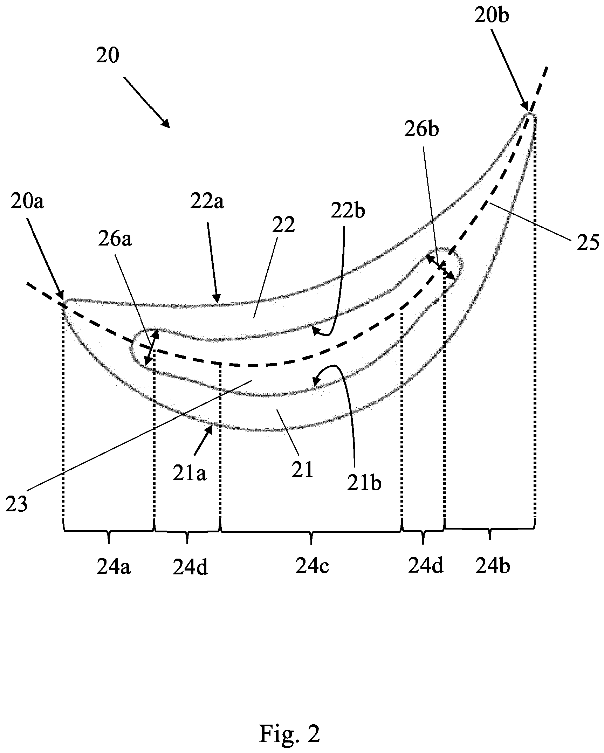

**Fig. 2** zeigt ein Schaufelblatt 20 der Strömungsmaschine 1 gemäß Figur 1 im Schnitt, und zwar in einer achsparallelen Schnittebene. Das Schaufelblatt 20 hat eine Vorderkante 20 A und eine Hinterkante 20 B, dazwischen erstrecken sich eine Saugseitenwand 21 und eine Druckseitenwand 22 deren Außenwandflächen 21 A, 22 A werden im Betrieb von dem Gas (Heißgas) umströmt, sie bilden die Saugseite (21 A) und die Druckseite (22 A) des Schaufelblatts 20.

Die den Außenwandflächen 21 A, 22 A entgegengesetzten Innenwandflächen 21 B, 22 B derjeweiligen Seitenwand 21,22 begrenzen miteinander eine Hohlraumstruktur 23 im Inneren, vorliegend einen durchgehenden Hohlraum. Die Besonderheit liegt in der Erstreckung der Innenwandflächen 21 B, 22 B, zu deren Betrachtung das Schaufelblatt 20 in mehrere Abschnitte untergliedert wird. Konkret gibt es einen stromaufwärtigen Endbereich 24 A und einem stromabwärtigen Endbereich 24 B, in den Endbereichen 24 A, B laufen die Seitenwände 21,22 ineinander. Dazwischen gibt es einen mittleren Abschnitt 24 C, und es gibt ferner zwei Abschnitte 24 D in denen die Innenwandflächen 21 B, 22 B jeweils eine Krümmung mit geänderten Vorzeichen haben.

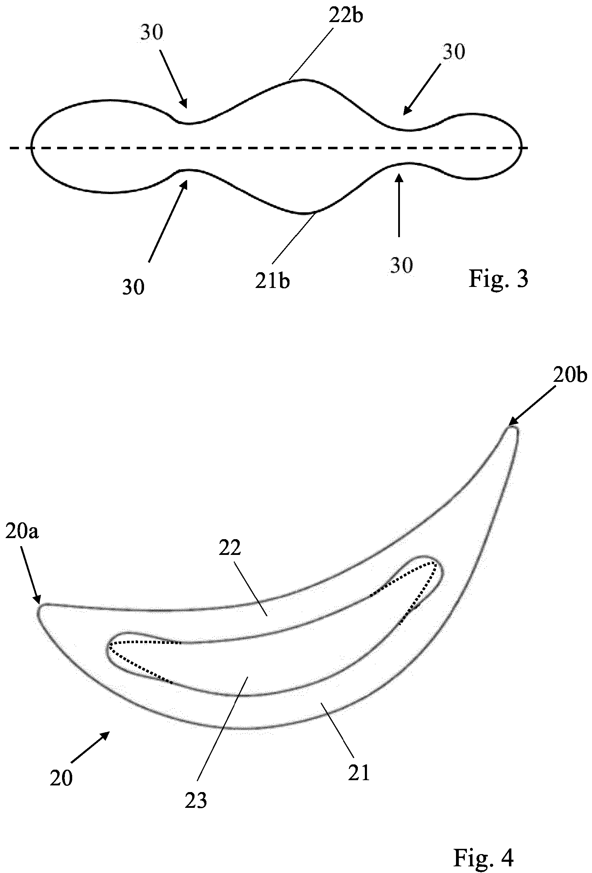

Insofern wird ergänzend auf **Fig. 3** verwiesen, welche die Innenwandflächen 21 B, 22 B auf die Skelettlinie 25 des Schaufelblatts 20 normiert zeigt. Das Schaufelblatt ist (gedanklich) gerade gebogen, also nicht gekrümmt. In dieser Darstellung sind die Krümmungswechsel 30 zu erkennen, mit welchen die saugseitige Innenwandfläche 21 B in den stromaufwärtigen Endbereich 24 A und auch den stromabwärtigen Endbereich 24 B hinein läuft. Ebenso erstreckt sich die druckseitige Innenwandfläche 22 B jeweils mit einem Krümmungswechsel 30 in den stromaufwärtigen 24 A und den stromabwärtigen Endbereich 24 B hinein. In der Folge ist an den Endbereichen 24 A, B eine jeweilige lichte Weite 26 A, B jeweils vergrößert.

**Fig. 4** zeigt zur Illustration dasselbe Schaufelblatt 20 wie Figur 2, wobei die Innenwandflächen 21 B, 22 B strichliert auch ohne Krümmungswechsel eingezeichnet sind. Dieser Vergleich zeigt, dass durch den Krümmungswechsel der Krümmungsradius der Innenwandflächen 21 B, 22 B in den Endbereichen 24 A, B jeweils vergrö-βert ist, was die lokale Spannungskonzentration verringern hilft (Kerbwirkung), vgl. auch die Beschreibungseinleitung im Einzelnen.

**BEZUGSZEICHENLISTE**

| | | |
|---|---|---|
| Strömungsmaschine | | 1 |
| | Verdichter | 1 A |
| | Brennkammer | 1 B |
| | Turbine | 1 C |
| Längsachse | | 2 |
| Heißgaskanal | | 3 |
| Schaufelblatt | | 20 |
| | Vorderkante | 20 A |
| | Hinterkante | 20 B |
| Saugseitenwand | | 21 |
| | Außenwandfläche (Saugseite) | 21 A |
| | Innenwandfläche (Saugseite) | 21 B |
| Druckseitenwand | | 22 |
| | Außenwandfläche (Druckseite) | 22 A |
| | Innenwandfläche (Druckseite) | 22 B |
| Hohlraumstruktur | | 23 |
| Stromaufwärtiger Endbereich | | 24 A |
| Stromabwärtiger Endbereich | | 24 B |
| Mittlerer Abschnitt | | 24 C |
| Abschnitte mit Krümmungswechsel | | 24 D |
| Skelettlinie | | 25 |
| Lichte Weite (am jeweiligen Endbereich) | | 26 A, B |
| Krümmungswechsel | | 30 |

## Patentansprüche

1. Schaufelblatt (20) zum Anordnen und Umströmen in einem Gaskanal (3) einer Strömungsmaschine (1),
wobei das Schaufelblatt (20) bezogen auf das Umströmen in dem Gaskanal (3) eine Saugseitenwand (21) und eine Druckseitenwand (22) aufweist, welche Seitenwände (21, 22) in einem stromaufwärtigen Endbereich (24 A) zu einer Vorderkante (20 A) hin ineinanderlaufen und in einem stromabwärtigen Endbereich (24 B) zu einer Hinterkante (20 B) hin ineinanderlaufen,
und wobei das Schaufelblatt (20) im Inneren eine Hohlraumstruktur (23) aufweist, die in einer, bezogen auf eine Längsachse (2) der Strömungsmaschine (1), achsparallelen Schnittebene betrachtet zwischen einer Innenwandfläche (21 B) der Saugseitenwand (21) und einer Innenwandfläche (22 B) der Druckseitenwand (22) eingefasst ist, wobei die Seitenwände (21, 22) jeweils in sich unterbrechungsfrei zusammenhängend sind, also zwischen der jeweiligen Innenwandfläche (21 B, 22 B) und der jeweiligen Außenwandfläche (21 A, 22 A) unterbrechungsfrei Seitenwandmaterial vorliegt, **dadurch gekennzeichnet, das s**
sich in der Schnittebene betrachtet zumindest eine der Innenwandflächen (21 B, 22 B) in jeden der beiden Endbereiche (24 A, B) hinein, normiert auf eine Skelettlinie (25) des Schaufelblatts (20) als Referenz, mit einem Krümmungswechsel (30) derart erstreckt, dass sich eine lichte Weite (26 A, B) der Hohlraumstruktur (23) in jeden der beiden Endbereiche (24 A, B) hinein vergrößert, wobei die lichte Weite (26 A, B) eine Öffnungsweite der Hohlraumstruktur ist, die zwischen der Innenwandfläche der Saugseitenwand und der Innenwandfläche der Druckseitenwand senkrecht zur Skelettlinie in der achsparallelen Schnittebene genommen wird.

2. Schaufelblatt (20) nach Anspruch 1, bei welchem die zumindest eine Innenwandfläche (21 B, 22 B) in der Schnittebene betrachtet zumindest im Bereich des Krümmungswechsels (30) einen glatten, also kantenfreien Verlauf hat.

3. Schaufelblatt (20) nach Anspruch 1 oder 2, bei welchem die Seitenwand (21, 22) des Schaufelblatts (20), welche die zumindest eine Innenwandfläche (21 B, 22 B) mit dem Krümmungswechsel (30) bildet, im Bereich des Krümmungswechsels (30) in der Schnittebene betrachtet eine um mindestens 5 % und um höchstens 35 % verringerte Wandstärke hat.

4. Schaufelblatt (20) nach einem der vorstehenden Ansprüche, bei welchem sich die zumindest eine Innenwandfläche (21 B, 22 B), bezogen auf eine Kanalhöhe des Gaskanals (3), über die gesamte Kanalhöhe mit dem Krümmungswechsel (30) gemäß Anspruch 1 erstreckt.

5. Schaufelblatt (20) nach einem der vorstehenden Ansprüche, bei welchem sich die zumindest eine Innenwandfläche (21 B, 22 B) bezogen auf eine Kanalhöhe des Gaskanals (3), die radial innen 0 % und radial außen 100 % beträgt, mindestens über einen Bereich zwischen 0 % und 20 % mit dem Krümmungswechsel (30) gemäß Anspruch 1 erstreckt.

6. Schaufelblatt (20) nach einem der vorstehenden Ansprüche, bei welchem sich die zumindest eine Innenwandfläche (21 B, 22 B) bezogen auf eine Kanalhöhe des Gaskanals (3), die radial innen 0 % und radial außen 100 % beträgt, mindestens über einen Bereich zwischen 80 % und 100 % mit dem Krümmungswechsel (30) gemäß Anspruch 1 erstreckt.

7. Schaufelblatt (20) nach einem der vorstehenden Ansprüche, bei welchem sich in zumindest einen der Endbereiche (24 A, B) hinein beide Innenwandflächen (21 B, 22 B) jeweils mit einem Krümmungswechsel (30) erstrecken.

8. Schaufelblatt (20) nach einem der vorstehenden Ansprüche, bei welchem die Hohlraumstruktur (23) in der Schnittebene betrachtet einen zwischen den Innenwandflächen (21 B, 22 B) durchgehenden Hohlraum bildet.

9. Turbinenmodul mit einem Schaufelblatt (20) nach einem der vorstehenden Ansprüche.

10. Verwendung eines Schaufelblatts (20) nach einem der Ansprüche 1 bis 8 oder eines Turbinenmoduls nach Anspruch 9 in einer Strömungsmaschine (1), insbesondere in einem Strahltriebwerk, bei welcher vorzugsweise die Hohlraumstruktur (23) im Betrieb der Strömungsmaschine (1) mit einem Kühlfluid durchströmt wird.

## Claims

1. Airfoil (20) to be arranged in and for exposure to flow in a gas duct (3) of a turbomachine (1),
the blade airfoil (20) comprising, with respect to the exposure to flow in the gas duct (3), a suction side wall (21) and a pressure side wall (22), which side walls (21, 22) converge in an upstream end region (24 A) toward a leading edge (20 A) and converge in a downstream end region (24 B) toward a trailing edge (20 B),
and the airfoil (20) comprising in the interior a cavity structure (23) which, when viewed in a sectional plane axially parallel with respect to a longitudinal axis (2) of the turbomachine (1), is enclosed between an inner wall surface (21 B) of the suction side wall (21) and an inner wall surface (22 B) of the pressure side wall (22), the side walls (21, 22) each being uninterruptedly contiguous, that is to say side-wall material being uninterruptedly present between the respective inner wall surface (21 B, 22 B) and the respective outer wall surface (21 A, 22 A), **characterized in that,**
when viewed in the sectional plane, at least one of the inner wall surfaces (21 B, 22 B) extends into each of the two end regions (24 A, B), normalized to a camber line (25) of the airfoil (20) as a reference, with a curvature change (30) such that a clear width (26 A, B) of the cavity structure (23) enlarges into each of the two end regions (24 A, B), the clear width (26 A, B) being an opening width of the cavity structure, which is taken between the inner wall surface of the suction side wall and the inner wall surface of the pressure side wall perpendicularly to the camber line in the axially parallel sectional plane.

2. Airfoil (20) according to claim 1, in which the at least one inner wall surface (21 B, 22 B), viewed in the sectional plane, has a smooth, that is to say edge-free, profile, at least in the region of the curvature change (30).

3. Airfoil (20) according to claim 1 or 2, in which the side wall (21, 22) of the airfoil (20), which forms the at least one inner wall surface (21 B, 22 B) having the curvature change (30), has a wall thickness that is reduced by at least 5% and by at most 35% in the region of the curvature change (30) in the sectional plane.

4. Airfoil (20) according to any of the preceding claims, in which, with respect to a duct height of the gas duct (3), the at least one inner wall surface (21 B, 22 B) extends with the curvature change (30) according to claim 1 over the entire duct height.

5. Airfoil (20) according to any of the preceding claims, in which, with respect to a duct height of the gas duct (3) that is 0% radially inwardly and 100% radially outwardly, the at least one inner wall surface (21 B, 22 B) extends with the curvature change (30) according to claim 1 at least over a region between 0% and 20%.

6. Airfoil (20) according to any of the preceding claims, in which, with respect to a duct height of the gas duct (3) that is 0% radially inwardly and 100% radially outwardly, the at least one inner wall surface (21 B, 22 B) extends with the curvature change (30) according to claim 1 at least over a region between 80% and 100%.

7. Airfoil (20) according to any of the preceding claims, in which both inner wall surfaces (21 B, 22 B) extend, in each case with a curvature change (30), into at least one of the end regions (24 A, B).

8. Airfoil (20) according to any of the preceding claims, in which, when viewed in the sectional plane, the cavity structure (23) forms a cavity that is continuous between the inner wall surfaces (21 B, 22 B).

9. Turbine module comprising an airfoil (20) according to any of the preceding claims.

10. Use of an airfoil (20) according to any of claims 1 to 8 or of a turbine module according to claim 9 in a turbomachine (1), in particular in a jet engine, in which a cooling fluid preferably flows through the cavity structure (23) during operation of the turbomachine (1).

## Revendications

1. Pale d'aube (20) destinée à être agencée dans une conduite de gaz (3) d'une turbomachine (1) et à permettre la circulation dans ladite conduite,
dans laquelle la pale d'aube (20), par rapport la circulation dans la conduite de gaz (3), présente une paroi latérale d'aspiration (21) et une paroi latérale de pression (22), lesquelles parois latérales (21, 22) se rencontrent dans une zone d'extrémité (24A) en amont par rapport à un bord d'attaque (20A) et se rencontrent dans une zone d'extrémité (24B) par rapport à un bord de fuite (20B),
et dans laquelle la pale d'aube (20) présente une structure creuse (23) à l'intérieur, laquelle structure est, vue dans un plan de coupe parallèle à l'axe par rapport à un axe longitudinal (2) de la turbomachine (1), enchâssée entre une surface de paroi intérieure (21B) de la paroi latérale d'aspiration (21) et une surface de paroi intérieure (22B) de la paroi latérale de pression (22), dans laquelle les parois latérales (21, 22) sont respectivement contiguës entre elles de manière ininterrompue, c'est-à-dire qu'un matériau de paroi latérale ininterrompue se trouve entre la surface de paroi intérieure (21B, 22B) respective et la surface de paroi extérieure (21A, 22A) respective, **caractérisée en ce que**
vue dans le plan de coupe, au moins l'une des surfaces de paroi intérieures (21B, 22B) dans chacune des deux zones d'extrémité (24A, B), standardisées comme référence sur une ligne d'ossature (25) de la pale d'aube (20), s'étend avec une variation de courbure (30) de telle sorte qu'une largeur intérieure (26A, B) de la structure creuse (23) s'agrandit dans chacune des deux zones d'extrémité (24A, B), dans laquelle la largeur intérieure (26A, B) est une largeur d'ouverture de la structure creuse, laquelle largeur d'ouverture est prise entre la surface de paroi intérieure de la paroi latérale d'aspiration et la surface de paroi intérieure de la paroi latérale de pression, perpendiculairement à la ligne d'ossature dans le plan de coupe parallèle à l'axe.

2. Pale d'aube (20) selon la revendication 1, dans laquelle l'au moins une surface de paroi intérieure (21B, 22B), vue dans le plan de coupe, présente un tracé lisse, c'est-à-dire sans arêtes, au moins dans la zone de la variation de courbure (30).

3. Pale d'aube (20) selon la revendication 1 ou 2, dans laquelle la paroi latérale (21, 22) de la pale d'aube (20), laquelle forme l'au moins une surface de paroi intérieure (21B, 22B) avec la variation de courbure (30), présente, vue dans le plan de coupe, une épaisseur de paroi réduite d'au moins 5 % et d'au plus 35 % dans la zone de la variation de courbure (30).

4. Pale d'aube (20) selon l'une des revendications précédentes, dans laquelle, par rapport à une hauteur de conduite de la conduite de gaz (3), l'au moins une surface de paroi intérieure (21B, 22B) s'étend sur toute la hauteur de conduite avec la variation de courbure (30) selon la revendication 1.

5. Pale d'aube (20) selon l'une des revendications précédentes, dans laquelle, par rapport à une hauteur de conduite de la conduite de gaz (3) qui est de 0 % radialement vers l'intérieur et de 100 % radialement vers l'extérieur, l'au moins une surface de paroi intérieure (21B, 22B) s'étend au moins sur une zone entre 0 et 20 % avec la variation de courbure (30) selon la revendication 1.

6. Pale d'aube (20) selon l'une des revendications précédentes, dans laquelle, par rapport à une hauteur de conduite de la conduite de gaz (3) qui est de 0 % radialement vers l'intérieur et de 100 % radialement vers l'extérieur, l'au moins une surface de paroi intérieure (21B, 22B) s'étend au moins sur une zone entre 80 et 100 % avec la variation de courbure (30) selon la revendication 1.

7. Pale d'aube (20) selon l'une des revendications précédentes, dans laquelle les deux surfaces de paroi intérieure (21B, 22B) s'étendent respectivement avec une variation de courbure (30) dans au moins l'une des zones d'extrémité (24A, B).

8. Pale d'aube (20) selon l'une des revendications précédentes, dans laquelle la structure creuse (23), vue dans le plan de coupe, forme un espace creux traversant entre les surfaces de paroi intérieure (21B, 22B).

9. Module de turbine comportant une pale d'aube (20) selon l'une des revendications précédentes.

10. Utilisation d'une pale d'aube (20) selon l'une des revendications 1 à 8 ou d'un module de turbine selon la revendication 9 dans une turbomachine (1), en particulier dans un turboréacteur, dans laquelle de préférence la structure creuse (23) est traversée par un liquide de refroidissement pendant le fonctionnement de la turbomachine (1).
